(19) Europäisches Patentamt
European Patent Office
Office européen des brevets

(11) EP 0 745 649 A1

(12) **DEMANDE DE BREVET EUROPEEN**

(43) Date de publication:
**04.12.1996 Bulletin 1996/49**

(51) Int Cl.[6]: **C08L 83/08**, C08G 77/388

(21) Numéro de dépôt: **96420156.0**

(22) Date de dépôt: **03.05.1996**

(84) Etats contractants désignés:
**AT DE ES FR GB GR IE IT LU NL PT**

(30) Priorité: **10.05.1995 FR 9505728**

(71) Demandeur: **RHONE-POULENC CHIMIE**
**92408 Courbevoie Cédex (FR)**

(72) Inventeurs:
- **Bomal, Yves**
  **75018 Paris (FR)**
- **Karrer, Philippe**
  **69006 Lyon (FR)**
- **Mas, Jean-Manuel**
  **69390 Millery (FR)**
- **Mignani, Gérard**
  **69008 Lyon (FR)**

(74) Mandataire: **Trolliet, Maurice**
**RHONE-POULENC CHIMIE,**
**Direction de la Propriété Industrielle,**
**Centre de Recherches des Carrières,**
**B.P. 62**
**69192 Saint-Fons Cédex (FR)**

(54) **Composés silicones à fonction phénylènediamine et leur usage comme anti-ozonants pour des matériaux en caoutchouc**

(57) La présente invention concerne des composés constitués essentiellement d'un polyorganosiloxane, linéaire, cyclique ou ramifié ayant par molécule au moins 3 motifs siloxyles dont au moins un motif siloxyle fonctionnel de formule :

$$(R^1)_aXSi(O)_{\frac{3-a}{2}}$$

où $R^1$ représente un radical alkyle en $C_1$ à $C_4$ ou phényle, X renferme une fonction phénylènediamine N,N' di- et/ou trisubstituée, liée au silicium par une liaison Si-(rotule hydrocarbonée)-N et/ou Si-(rotule hydrocarbonée)-C, et a est un nombre choisi parmi 0, 1 et 2.

La présente invention concerne également l'utilisation de pareils composés comme antiozonants pour les caoutchoucs et en particulier pour des compositions de caoutchoucs pour pneumatiques.

EP 0 745 649 A1

## Description

La présente invention concerne, dans son premier objet, de nouveaux composés constitués essentiellement d'un polyorganosiloxane comprenant par molécule au moins une fonction phénylènediamine N,N' di- et/ou trisubstituée liée à l'atome de silicium par des liaisons Si-N et/ou Si-C et éventuellement au moins une autre fonction compatibilisante liée également au silicium par une liaison Si-C. Elle conceme aussi, dans un second objet, des procédés de préparation desdits composés à base de silicone. Elle concerne encore, dans un troisième objet, l'utilisation de pareils composés comme antiozonants pour les caoutchoucs et en particulier pour des compositions de caoutchoucs pour pneumatiques.

La stabilité au vieillissement des caoutchoucs est influencée grandement par l'action de la chaleur, de la lumière et des agents atmosphériques, surtout l'ozone. La dégradation des caoutchoucs par l'ozone (à l'état de traces dans l'air) est un processus cinétique se produisant à la surface du matériau polymère qui met en jeu l'ozone et les doubles liaisons éthyléniques du caoutchouc et provoque des craquelures de surface. Il est connu que les phénomènes dynamiques accentuent les effets de l'ozone de sorte que, dans le cas des compositions pour pneumatiques, il est nécessaire d'avoir un antiozonant demeurant actif sous l'effet de contraintes dynamiques.

Cette dégradation est généralement limitée par l'introduction dans le caoutchouc de petites quantités d'antiozonants. Parmi ces antiozonants, les para-phénylènediamines, en particulier : la N-phényl-N'-(diméthyl-1,3 butyl)-p-phénylènediamine, la N-phényl-N'-isopropyl-p-phénylénediamine, la N-phényl-N'-cyclohexyl-p-phénylènediamine, la N, N'-bis(méthyl-1 heptyl)-p-phénylènediamine et des mélanges de ces matières entre elles ou des mélanges d'au moins une de ces matières avec des cires filmogènes (par exemple du type paraffine ou du type cire microcristalline), sont actuellement les antiozonants les plus efficaces.

L'utilisation de ces para-phénylènediamines a permis d'améliorer la protection contre l'ozone, aussi bien en conditions statique que dynamique mais, cependant, un inconvénient majeur qui se manifeste, même avec les meilleures matières de la famille que l'on vient de décrire, réside dans le fait que les para-phénylènediamines génèrent la formation de tâches et de décolorations à la surface du matériau caoutchouc. Les mots "tâches" et "décolorations" sont utilisés ici pour décrire la tendance de ces antiozonants d'une part à migrer en partie à la surface du matériau caoutchouc et d'autre part à exsuder en partie à l'extérieur de cette surface en y produisant une efflorescence marron. Cette teinture par exsudation est très gênante dans la plupart des articles en caoutchouc de couleur claire. Dans les pneumatiques, qui est la plus grande application où il faut une protection contre l'ozone, la tendance à une teinture par exsudation est gênante en particulier dans les pneumatiques du type à flanc blanc. Même dans des pneumatiques du type sans flanc blanc, la tendance des matières à exsuder peut être gênante par le fait qu'il se crée une surface marron et terne sur le flanc du pneumatique. Cela est esthétiquement gênant, et de plus il en résulte une perte de la matière protectrice contre l'ozone et par voie de conséquence une diminution de son efficacité.

Pour avoir plus de détails sur l'utilisation des antiozonants à base de para-phénylènediamines et sur le problème du tâchage, on pourra se reporter notamment aux contenus des documents suivants : R.W. LAYER et R.P. LATTIMER, Rubber Chem. and Techno. 63(3), 426 (1990) , J. POSPISIL, Developments Series : Developments in Polymer Stabilisation, Chapitre 1 intitulé "Aromatic amine antidegradants", édité par "Elsevier Applied Science" en 1984.

Un but de la présente invention est de procurer un nouveau antiozonant qui est très efficace pour protéger un article en caoutchouc, en particulier du type de ceux sujets à une contrainte dynamique pendant les périodes d'exposition à l'ozone ; cela implique une excellente mobilité de l'antiozonant au sein du matériau caoutchouc pour migrer en partie à la surface du matériau où les réactions d'ozonisation se déroulent.

Un autre but de l'invention est de procurer une protection contre l'ozone qui confère au matériau caoutchouc une résistance à la fatigue en flexion qui est équivalente, voir meilleure à celle conférée par les meilleurs matières de protection appartenant à la famille décrite ci-avant, en particulier les mélanges de N-phényl-N'-(diméthyl-1,3 butyl)-p-phénylènediamine avec une cire filmogène.

Un autre but encore de l'invention, et il constitue le but majeur à atteindre, est de procurer une matière de protection contre l'ozone qui, par une action compatibilisante contrôlée avec le matériau caoutchouc ayant pour effet de freiner et d'arrêter même le phénomène d'exsudation de l'antiozonant à l'extérieur de la surface du matériau caoutchouc, contribue à améliorer la permanence des propriétés antiozone et ne produit pas une efflorescence marron gênante sur une surface noire ou blanche.

Il a maintenant été trouvé, conformément à la présente invention, que l'on pouvait atteindre ces buts grâce à l'utilisation de composés constitués essentiellement d'un polyorganosiloxane comprenant dans leur molécule au moins une fonction phénylènediamine N,N' di- et/ou trisubstituée.

Plus précisément, la présente invention concerne, dans son premier objet, de nouveaux composés constitués essentiellement d'un polyorganosiloxane comprenant par molécule au moins 3 motifs siloxyles dont au moins un motif siloxyle fonctionnel de formule :

$$(R^1)_aXSi(O)_{\frac{3-a}{2}} \qquad (I)$$

dans laquelle :

- . les symboles $R^1$ sont identiques ou différents et représentent chacun un radical hydrocarboné monovalent choisi parmi les radicaux alkyles, linéaires ou ramifiés, ayant de 1 à 4 atomes de carbone et phényle ;
- . les symboles X sont identiques ou différents et représentent chacun un groupe comprenant une fonction phénylènediamine N,N' di- et/ou trisubstituée, liée à un atome de silicium par une liaison Si-(rotule hydrocarbonée)-N et/ou Si-(rotule hydrocarbonée)-C ;
- . a est un nombre choisi parmi 0, 1 et 2.

Le polyorganosiloxane peut présenter en outre au moins un autre motif fonctionnel de formule :

$$(R^1)_bWSi(O)_{\frac{3-b}{2}} \qquad (II)$$

dans laquelle :

- . les symboles $R^1$ ont les mêmes significations que celles données ci-avant à propos de la formule (I) ;
- . le symbole W représente un groupe monovalent à fonction compatibilisante choisi parmi : un radical alkyle, linéaire ou ramifié, ayant plus de 4 atomes de carbone ; un radical de formule $-R^2-COO-R^3$ dans laquelle $R^2$ représente un radical alkylène, linéaire ou ramifié, ayant de 5 à 20 atomes de carbone et $R^3$ représente un radical alkyle, linéaire ou ramifié, ayant de 1 à 12 atomes de carbone ; un radical de formule $-R^4-O-(R^5-O)_c-R^6$ dans laquelle $R^4$ représente un radical alkylène, linéaire ou ramifié, ayant de 3 à 15 atomes de carbone, $R^5$ représente un radical alkylène, linéaire ou ramifié, ayant de 1 à 3 atomes de carbone, c est un nombre de 0 à 10 et $R^6$ représente un atome d'hydrogène, un radical alkyle, linéaire ou ramifié ayant de 1 à 12 atomes de carbone ou un radical acyle $-CO-R^7$ où $R^7$ représente un radical alkyle linéaire ou ramifié ayant de 1 à 11 atomes de carbone ;
- . b est un nombre choisi parmi 0, 1 et 2.

Le (ou les) autre(s) motif(s) siloxyle(s) possible(s) du polyorganosiloxane réponde(nt) à la formule :

$$(R^1)_d(H)_eSi(O)_{\frac{4-(d+e)}{2}} \qquad (III)$$

dans laquelle :

- . les symboles $R^1$ ont les mêmes significations que celles données ci-avant à propos de la formule (I) ;
- . d est un nombre choisi parmi 0, 1, 2 et 3 ;
- . e est un nombre choisi parmi 0 et 1 ;
- . la somme d + e est au plus égale à 3.

Les motifs siloxyles de formule (I) quand il y en a plus de deux, peuvent être identiques ou différents entre eux ; la même remarque s'applique également aux motifs siloxyles de formules (II) et (III).

Dans le présent mémoire, on comprendra que l'on définit par :

- "fonctions phénylènediamine ou fonctions PD" : les groupes X ;
- "fonctions compatibilisantes" : les éventuels groupes monovalents W qui sont directement liés aux atomes de silicium (on forme alors dans ce cas des liaisons Si-C) ;
- "organopolysiloxanes mixtes" : les organopolysiloxanes qui sont équipés à la fois de fonction(s) PD et de fonction (s) compatilisante(s).

Compte-tenu des valeurs que peuvent prendre les symboles a, b, d et e, on doit comprendre encore que les polyorganosiloxanes entrant dans le cadre de l'invention peuvent donc présenter une structure linéaire, cyclique, ramifiée (résine) ou un mélange de ces structures. Lorsqu'il s'agit de polymères linéaires, ceux-ci peuvent éventuellement

présenter jusqu'à 50 % en mole de ramification [motifs de types "T" ($RSiO_{3/2}$) et/ou "Q" ($SiO_{4/2}$)].

Lorsqu'il s'agit de résines polyorganosiloxanes, celles-ci sont constituées d'au moins deux types de motifs siloxyles différents, à savoir des motifs "M" ($R_3SiO_{1/2}$) et/ou "T" et éventuellement des motifs "D" ($R_2SiO_{2/2}$)] ; le rapport nombre de motifs "M" / nombre de motifs "Q" et/ou "T" est en général compris entre 4/1 et 0,5/1, et le rapport nombre de motifs "D" / nombre de motifs "Q" et/ou "T" est en général compris entre 0 et 100/1.

De manière avantageuse, les nombres des motifs de formules (I), et éventuellement (II) et (III) sont tels que les polyorganosiloxanes entrant dans le cadre de l'invention contiennent :

- au moins 0,5 % molaire, de préférence de 10 à 90 % molaire, de fonctions PD, et éventuellement
- au moins 0,5 % molaire, de préférence de 10 à 90 % molaire, de fonctions compatibilisantes. Les % molaires indiqués expriment le nombre de moles de fonctions pour 100 atomes de silicium.

Comme indiqué ci-avant, la présente invention, prise dans son premier objet, concerne de nouveaux composés constitués essentiellement d'un polyorganosiloxane comprenant par molécule des motifs siloxyles de formules (I) et éventuellement (II) et (III) : l'expression "essentiellement" doit être interprétée comme signifiant que les polyorganosiloxanes entrant dans le cadre de la présente invention peuvent se présenter à l'état pur ou sous forme d'un mélange avec au plus 5 % en poids d'une phénylènediamine N,N' di- et/ou trisubstituée à l'état libre. Cette phénylènediamine qui n'est pas greffée sur la chaîne silicone peut être la phénylènediamine de départ à partir de laquelle est (sont) préparé(s) le (ou les) précurseur(s) éthyléniquement insaturé(s) dont dérive(nt) les groupes X.

Les radicaux $R^1$ préférés sont : méthyle, éthyle, n-propyle, isopropyle, n-butyle ; de manière plus préférentielle, au moins 80 % molaire des radicaux $R^1$ sont des méthyles.

Les fonctions PD représentées par les symboles X sont choisies de manière préférentielle parmi les radicaux de formules :

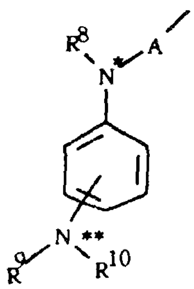
(IV-i)

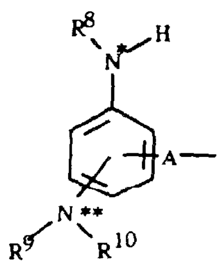
(IV-2i)

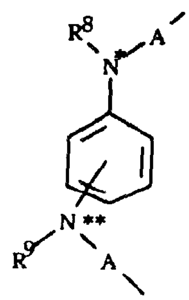
(IV-3i)

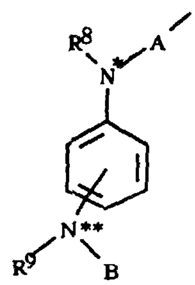
(IV-4i)

et leur mélanges, formules dans lesquelles :

. A est un radical organique divalent de formule :

$$-(D)_f-CHR^{11}-CH_2-$$

où : D est un reste alkylène, linéaire ou ramifié, ayant de 1 à 10 atomes de carbone, avec f étant un nombre égal à 0 ou 1 ; $R^{11}$ est un atome d'hydrogène ou un radical alkyle, linéaire ou ramifié, ayant de 1 à 3 atomes de carbone ; la valence libre de droite en caractère gras est celle qui est reliée à un atome de silicium, tandis que l'autre valence libre à gauche est reliée à un atome d'azote ;

. B est un radical organique monovalent de formule :

$$-(D)_f-CR^{11}=CH_2$$

où les symboles D, f et $R^{11}$ ont les significations données ci-avant à propos du radical A;

. les radicaux $R^8$ et $R^9$, identiques ou différents, sont choisis parmi les radicaux alkyles, linéaires ou ramifiés, ayant

de 3 à 18 atomes de carbone, les radicaux cycloalkyles ayant de 4 à 12 atomes de carbone, phényle, benzyle et naphtyle ;

. $R^{10}$, qui peut être identique à $R^8$ et/ou $R^9$, est choisi parmi un atome d'hydrogène et l'un des radicaux représentés par $R^8$ et $R^9$ ;
. chaque reste amino

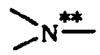

d'un cycle benzénique est en position ortho, méta ou para par rapport à l'autre reste amino

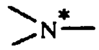 ;

. le radical A de la formule (I-2i) est en position ortho ou para par rapport au reste amino

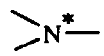 ;

⇒ au moins une des fonctions X répond à la formule (IV-i) ou (IV-2i), et
⇒ quand, le cas échéant, on a un mélange de fonctions X de formules (IV-i) et/ou (IV-2i) avec des fonctions X de formules (IV-3i) et éventuellement (IV-4i), le nombre de fonctions X de formules (IV-3i) et éventuellement (IV-4i) greffées sur une chaîne polyorganosiloxane, linéaire ou ramifiée, est en moyenne strictement inférieur à 2.

De manière plus préférentielle les fonctions X sont choisies parmi les groupes de formules (IV-i) à (IV-4i) et leur mélanges, répondant à la modalité préférentielle définie ci-avant, pour lesquels :

. A est choisi parmi les radicaux divalents de formule

$$-D-CH_2-CH_2-$$

(dans ce cas f = 1 et $R^{11}$ = H) où D est un reste $-(CH_2)_g-$ avec g étant un nombre de 1 à 6 ;
. B est choisi parmi les radicaux monovalents de formule $-D-CH=CH_2$ où le symbole D à la signification donnée ci-avant à propos de A ;
. les radicaux $R^8$ et $R^9$, identiques, représentent des radicaux alkyles ramifiés ayant de 3 à 8 atomes de carbone, en particulier les radicaux alkyles de ce type dans la structure desquels le carbone portant la valence libre est lié à un atome d'hydrogène et à deux atomes de carbone, par exemple les radicaux isopropyle, sec-butyle, diméthyl-1,3 butyle, diméthyl-1,4 pentyle, méthyl-1 heptyle ;
. $R^{10}$ représente un atome d'hydrogène ;
. chaque reste amino

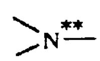

est en position para par rapport à l'autre reste amino

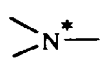 .

Les fonctions compatibilisantes optionnelles W préférées sont choisies : parmi un radical alkyle, linéaire ou ramifié,

ayant de 5 à 18 atomes de carbone ; un radical de formule $-R^2-COO-R^3$ dans laquelle $R^2$ représente un radical alkylène, linéaire ou ramifié, ayant de 8 à 12 atomes de carbone et $R^3$ représente un radical alkyle, linéaire ou ramifié, ayant de 1 à 6 atomes de carbone ; un radical de formule $-R^4-O-(R^5-O)_c-R^6$ dans laquelle $R^4$ représente un radical alkylène, linéaire ou ramifié, ayant de 3 à 6 atomes de carbone, $R^5$ représente un radical alkylène linéaire ou ramifié ayant de 2 à 3 atomes de carbone, c est un nombre de 0 à 6 et $R^6$représente un atome d'hydrogène, un radical alkyle, linéaire ou ramifié, ayant de 1 à 6 atomes de carbone ou un radical acyle $-CO-R^7$ où $R^7$ représente un radical alkyle, linéaire ou ramifié, ayant de 1 à 5 atomes de carbone.

De manière plus préférentielle, les fonctions compatibilisantes W sont choisies parmi les radicaux n-octyle, n-undécyle, n-dodécyle, n-tridécyle, décaméthylène carboxylate de méthyle ou d'éthyle.

La présente invention, prise dans son premier objet, vise plus précisément encore :

- des composés constitués essentiellement de polymères polyorganosiloxanes éventuellement mixtes, linéaires, statistiques, séquencés ou à blocs, de formule moyenne:

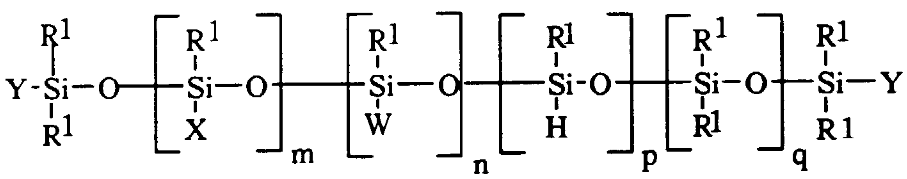 (V)

dans laquelle :

- . les symboles $R^1$, X et W ont les significations générales données ci-avant à propos des formules (I) et (II) ;
- . les symboles Y représente un radical monovalent choisi parmi $R^1$, X, W et un atome d'hydrogène ;
- . m est un nombre entier ou fractionnaire allant de 0 à 180;
- . n est un nombre entier ou fractionnaire allant de 0 à 180;
- . p est un nombre entier ou fractionnaire allant de 0 à 10 ;
- . q est un nombre entier ou fractionnaire allant de 0 à 100 ;
- . avec les conditions selon lesquelles :
  - si m est différent de 0 et dans le cas éventuel des polymères mixtes si n est différent de 0 : la somme m + n + p + q se situe dans l'intervalle allant de 5 à 200 ; le rapport $100m/(m + n + p + q + 2) \geq 0,5$; et le rapport $100n/(m + n + p + q + 2) \geq 0,5$, ce rapport étant identique ou différent du précédent rapport ;
  - si m = 0 et dans le cas éventuel des polymères mixtes si n est différent de 0 : au moins un des substituants Y représente le radical X ; la somme n + p + q se situe dans l'intervalle allant de 5 à 100 ; et le rapport $100\ n / (n + p + q + 2) \geq 0,5$,
  - si m est différent de 0 et n = 0 : la somme m + p + q se situe dans l'intervalle allant de 5 à 100 ; le rapport $100\ m / (m + p + q + 2) \geq 0,5$ ; et dans le cas éventuel des polymères mixtes au moins un des substituants Y représente le radical W ;
  - si m = 0 et n = 0 : la somme p + q se situe dans l'intervalle allant de 5 à 100 ; l'un des substituants Y étant le radical X ; et dans le cas éventuel des polymères mixtes l'autre substituant Y étant le radical W ; et

. avec la condition supplémentaire selon laquelle, si m est différent de 0 et si X comprend des fonctions de formules (IV-3i) et éventuellement (IV-4i), chacun des trois produits suivants :

- le produit (m + 1) x G, quand un seul des substituants Y représente le radical X, ou
- le produit (m + 2) x G, quand les deux substituants Y représentent le radical X, ou
- le produit m x G, quand les deux substituants Y représentent les radicaux $R^1$ et/ou W,

est strictement inférieur à 2, où G est la fraction molaire des fonctions X de formules (IV-3i) et éventuellement (IV-4i) dans l'ensemble des fonctions X de structure (IV) ;

et ceux de formule moyenne :

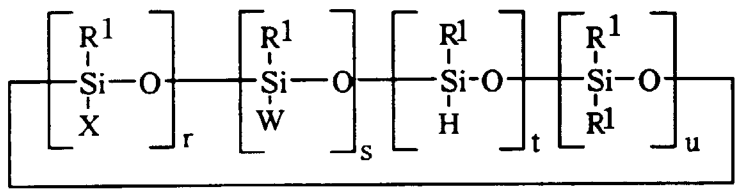

(VI)

dans laquelle :

- . les symboles $R^1$, X et W ont les significations générales données ci-avant à propos des formules (I) et (II) ;
- . r est un nombre entier ou fractionnaire allant de 1 à 9 ;
- . s est un nombre entier ou fractionnaire allant de 0 à 9 ;
- . t est un nombre entier ou fractionnaire allant de 0 à 0,5 ;
- . u est un nombre entier ou fractionnaire allant de 0 à 5 ;
- . la somme r + s + t + u se situe dans l'intervalle allant de 3 à 10 ;
- . avec la condition selon laquelle, si X comprend des fonctions de formules (IV-3i) et éventuellement (IV-4i), le produit r x G est strictement inférieur à 2, G étant la fraction molaire définie ci-avant à propos de la formule (V).

Les polymères de formule (V), qui sont préférés (polymères dits PL1) ou très préférés (polymères dits PL2), sont ceux pour lesquels :

- . les symboles Y représentent $R^1$ ;
- . m est un nombre entier ou fractionnaire allant de 1 à 90 ;
- . n est un nombre entier ou fractionnaire allant de 0 à 90 ;
- . p est un nombre entier ou fractionnaire allant de 0 à 5 ;
- . q est un nombre entier ou fractionnaire allant de 0 à 50 ;
- . la somme m + n + p + q est un nombre entier ou fractionnaire allant de 10 à 100 ;
- . le rapport 100 m / (m + n + p + q + 2) se situe dans l'intervalle allant de 10 à 90 ;
- . avec la condition selon laquelle si n est différent de 0, le rapport 100 n / (m + n + p + q + 2) se situe dans l'intervalle allant de 10 à 90, ce rapport pouvant être identique ou différent du rapport précédent ; et
- . avec la condition supplémentaire selon laquelle, si X comprend des fonctions de formules (IV-3i) et éventuellement (IV-4i), le produit m x G est strictement inférieur à 2, G étant la fraction molaire définie ci-avant à propos de la formule (V) ;
- . les radicaux $R^1$, X et W possèdent simultanément les définitions préférentielles (dans le cas des polymères PL1) ou plus préférentielles (dans le cas des polymères PL2) données ci-avant à propos de chacun d'eux.

Les polymères de formule (VI),qui sont préférés (polymères dits PC1) ou très préférés (polymères dits PC2), sont ceux pour lesquels :

- . r est un nombre entier ou fractionnaire allant de 1 à 4,5 ;
- . s est un nombre entier ou fractionnaire allant de 0 à 4,5 ;
- . t est un nombre entier ou fractionnaire allant de 0 à 0,25 ;
- . u est un nombre entier ou fractionnaire allant de 0 à 2,5 ;
- . la somme r + s + t + u est un nombre entier ou fractionnaire allant de 3 à 5 ;
- . avec la condition selon laquelle, si X comprend des fonctions de formules (IV-3i) et éventuellement (IV-4i), le produit r x G est strictement inférieur à 2, G étant la fraction molaire définie ci-avant à propos de la formule (V) ;
- . les radicaux $R^1$, X et W possèdent simultanément les définitions préférentielles (dans le cas des polymères PC1) ou plus préférentielles (dans le cas des polymères PC2) données ci-avant à propos de chacun d'eux.

Les polymères de formule (V), qui conviennent spécialement bien (polymères dits PLS1) ou tout spécialement bien (polymères dits PLS2), sont les polymères PL1 ou PL2 définis ci-avant pour lesquels le symbole n est un nombre allant de 1 à 90 .

Les polymères de formule (VI), qui conviennent spécialement bien (polymères dits PCS1) ou tout spécialement bien (polymères dits PCS2), sont les polymères PC1 ou PC2 définis ci-avant pour lesquels le symbole s est un nombre allant de 1 à 4,5.

De manière avantageuse, les composés, selon l'invention, constitués essentiellement d'organopolysiloxanes éventuellement mixtes peuvent être obtenus à partir, et ceci constitue le second objet de l'invention :

. des organohydrogénopolysiloxanes (H) correspondants, qui sont exempts de fonction(s) PD X et de fonction(s) compatibilisante(s) W,
. du (ou des) composé(s) organique(s) éthyléniquement insaturé(s) (Ψ), appelés "précurseur(s)", dont dérive(nt) la (ou les) fonction(s) PD représentée(s) par X,
. et éventuellement du (ou des) composé(s) éthyléniquement insaturé(s) en bout de chaîne (Ξ), appelés "précurseur (s) (Ξ)", dont dérive(nt) la (ou les) fonction(s) W.

Ainsi, les polyorganosiloxanes éventuellement mixtes de l'invention peuvent être obtenus en mettant en oeuvre :

- dans le cas de polymères à fonction(s) PD uniquement : une réaction d'addition (hydrosilylation), ou
- dans le cas de polymères mixtes à fonction(s) PD et à fonction(s) compatibilisante(s) : deux réactions d'additions (hydrosilylations) simultanées ou successives,

ce à partir : des organohydrogénopolysiloxanes (H) correspondants exempts des fonctions X et W, du (ou des) précurseur(s) (Ψ) dont dérive(nt) la (ou les) fonction(s) X et éventuellement du (ou des) précurseur(s) (Ξ) dont dérive(nt) le (ou les) fonction(s) W.

Ces réactions d'hydrosilylations peuvent être réalisées à une température de l'ordre de 20 à 200°C, de préférence de l'ordre de 60 à 120°C, en présence d'un catalyseur à base d'un métal du groupe du platine ; on peut citer en particulier les dérivés et complexe du platine décrits dans US-A-3 715 334, US-A-3 814 730, US-A-3 159 601, US-A-3 159 662.

Les quantités de catalyseur mises en oeuvre sont de l'ordre de 1 à 300 parties par million, exprimées en métal par rapport au milieu réactionnel.

Dans la définition de la "mole de (Ψ)", on considérera comme entité élémentaire l'insaturation oléfinique susceptible de réagir avec (H) par hydrosilylation. De même dans la définition de la "mole de (Ξ)", on considérera comme entité élémentaire l'insaturation oléfinique susceptible de réagir avec (H) par hydrosilylation.

Les quantités de réactifs pouvant être mises en oeuvre correspondent généralement à un rapport molaire [(Ψ) + éventuellement (Ξ)] / SiH [de (H)] qui est de l'ordre de 1 à 5 , de préférence de l'ordre de 1 à 2.

Les réactions d'hydrosilylations peuvent avoir lieu en masse ou, de préférence, au sein d'un solvant organique volatil tel que le toluène, le xylène, le méthylcyclohexane, le tétrahydrofuranne, l'heptane, l'octane ou l'isopropanol ; le milieu réactionnel peut contenir en outre un agent tampon consistant notamment en un sel alcalin d'un acide monocarboxylique comme par exemple l'acétate de sodium.

En fin de réactions, les polyorganosiloxanes éventuellement mixtes qui sont obtenus à l'état brut peuvent être en mélange avec :

- les précurseurs (Ψ) et/ou (Ξ) engagés en excès ou non réagis, et/ou
- le solvant organique mis en oeuvre, et/ou
- la phénylènediamine de départ, à partir de laquelle est (sont) préparé(s) le (ou les) précurseur(s) (Ψ), et qui n'a pas totalement été éliminée du milieu réactionnel au moment de la préparation du (ou des) précurseur(s) (Ψ).

Lorsque l'on est conduit à un pareil mélange de produits, si l'on souhaite pouvoir disposer alors d'un polyorganosiloxane éventuellement mixte exempt d'impureté(s) - et il s'agit là d'une modalité préférentielle -, on procédera à une purification par exemple par simple dévolatilisation du précurseur (Ξ) en excès ou non réagi et/ou du solvant mis en oeuvre par un chauffage opéré par exemple entre 100° et 180°C sous pression réduite comprise entre 4 et $13,3.10^2$Pa et/ou par simple extraction du précurseur (Ψ) et/ou de la phénylènediamine de départ résiduelle à l'aide par exemple d'un monoalcool aliphatique saturé. Il est encore possible d'éliminer le précurseur (Ψ) en excès ou non réagi par simple dévolatilisation réalisée par un chauffage opéré par exemple entre 100° et 180°C sous pression réduite inférieure à $0,133.10^2$ Pa.

Les organohydrogénopolysiloxanes (H) servant par exemple à la préparation des polydiorganosiloxanes mixtes linéaires de formule (V) sont ceux de formule :

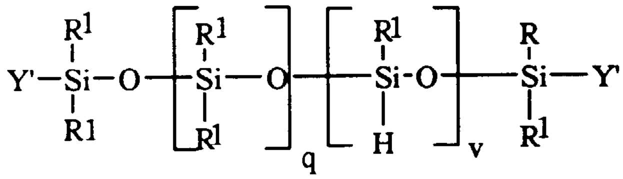

(VII)

dans laquelle :

- les symboles $R^1$ et q ont les significations générales ou préférentielles données ci-avant à propos de la formule (V) ;
- les symboles Y' représentent $R^1$ ou un atome d'hydrogène ;
- v est un nombre entier ou fractionnaire égal à m + n + p ;
- avec la condition selon laquelle, si v = 0, q est un nombre se situant dans l'intervalle allant de 5 à 100 et alors au moins un des radicaux Y' représentent un atome d'hydrogène.

Les organohydrogénopolysiloxanes (H) servant par exemple à la préparation des polydiorganosiloxanes mixtes cycliques de formule (VI) sont ceux de formule :

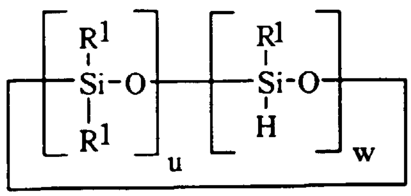

(VIII)

dans laquelle :

- les symboles $R^1$ et u ont les significations générales ou préférentielles données ci-avant à propos de la formule (VI) ;
- w est un nombre entier ou fractionnaire égal à r + s + t ;
- la somme u + w se situe dans l'intervalle allant de 3 à 10.

De tels organohydrogénopolysiloxanes (H) de formules (VII) et (VIII) sont connus dans la littérature et, pour certains, ils sont disponibles dans le commerce.

Les précurseurs (Ψ), dont dérivent les fonctions X, sont de préférence les composés insaturés éthyléniquement formé par les phénylènediamines de formules :

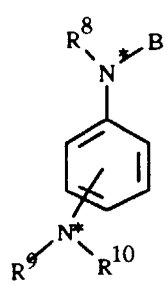

(IX-i)

,

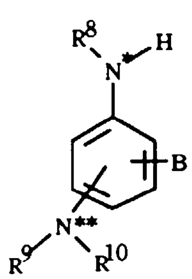

(IX-2i)

,

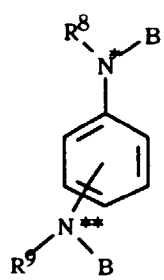

(IX-3i)

et leurs mélanges,

. les significations générales ou particulières des symboles $R^8$, $R^9$, $R^{10}$, B et les diverses positions possibles des groupes

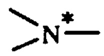 , 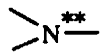

et B sur les cycles benzéniques étant celles indiquées ci-avant à propos des formules (IV-i) à (IV-4i) ;

- ⇒ au moins un des précurseurs (Ψ) répond à la formule (IX-i) ou (IX-2i), et
- ⇒ quand, le cas échéant, on engage un mélange de précurseurs de formules (IX-i) et/ou (IX-2i) avec un précurseur de formule (IX-3i), la fraction molaire G' de précurseur de formule (IX-3i) dans l'ensemble des précurseurs de structure (IX) est déterminée de manière à ce que, après réalisation de la réaction d'hydrosilylation, le nombre de fonctions X de formules (IV-3i) et éventuellement (IV-4i) qui en dérivent, greffées sur une chaîne polyorganosiloxane, linéaire ou ramifiée, est en moyenne strictement inférieur à 2.

Conformément à une modalité retenue de manière plus préférentielle, on engage dans la réaction d'hydrosilylation, au besoin après lui avoir fait subir une étape de purification, le produit de réaction à l'état brut tel qu'il est obtenu à l'issue de la mise en oeuvre du procédé consistant à faire réagir la phénylènediamine de formule :

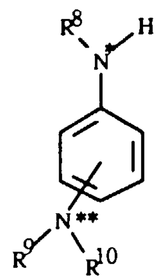

(X)

avec un composé halogéné de formule :

$$E-(D)_f-CR^{11}=CH_2 \qquad (XI)$$

où E représente un atome d'halogène comme par exemple le chlore, le brome ou l'iode tandis que les symboles D, f et $R^{11}$ ont les significations générales ou préférentielles données ci-avant à propos des formules (IV-i) à (IV-4i), en opérant en présence d'une quantité appropriée d'au moins une amine tertiaire.

Le schéma de synthèse est le suivant :

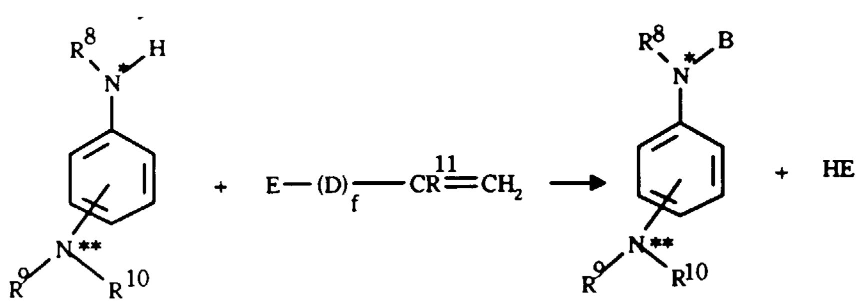

(X) (XI) (IX-i)

le symbole B de la formule (IX-i) représentant le radical monovalent

$$-(D)_f-CR^{11}{=}CH_2$$

Il est possible que des réactions secondaires conduisent, à côté du précurseur de formule (IX-i), à la formation d'un composé de C-alkénylation correspondant au précurseur de formule (IX-2i). La proportion molaire du précurseur de formule (IX-2i), quand il s'en forme, exprimée en % molaire dans le mélange des précurseurs de formules (IX-i) + (IX-2i), est généralement au plus égale à 15 %.

Le taux de transformation de la phénylènediamine de départ de formule (X) peut ne pas être complet (égal à 100 %) ; dans le cas d'un taux de transformation incomplet, il va rester de la diamine de départ non réagi dans le milieu réactionnel de fin de réaction, et on procédera alors à une purification du produit brut de la réaction par exemple par distillation sous pression réduite pour éliminer la totalité ou, à défaut, la majeure partie de la diamine de départ non réagie.

Dans le cas où le substituant $R^{10}$ de la diamine de départ de formule (X) est un atome d'hydrogène la réaction conduit alors à la formation d'un composé additionnel de N,N'-dialkénylation correspondant au précurseur de formule (IX-3i).

La fraction molaire G' du précurseur de formule (IX-3i), dans le mélange des précurseurs de formules [(IX-i) + éventuellement (IX-2i)] + (IX-3i), qui dépend beaucoup des conditions opératoires [quantités respectives de la diamine de départ de formule (X) et du composé halogéné de formule (XI) ; température de réaction ] peut être égale ou supérieure au seuil désiré à partir duquel, après réalisation de la réaction d'hydrosilylation, on va être conduit à des fonctions X greffées de formules (IV-3i) et éventuellement (IV-4i), dérivant du précurseur de formule (IX-3i), dont le nombre par chaîne polyorganosiloxane, linéaire ou ramifiée, sera en moyenne égal ou supérieur à 2. Dans ce cas, le produit brut de la réaction, avant d'être engagé dans la réaction d'hydrosilylation, va subir une purification par exemple par distillation sous pression réduite en vue d'obtenir un mélange renfermant la plus faible fraction molaire G' possible de précurseur N,N'-dialkénylé de formule (IX-3i) de manière à ce que, par réalisation de la réaction d'hydrosilylation, le précurseur considéré conduisent à des fonctions X greffées de formules (IV-3i) et éventuellement (IV-4i) dont le nombre par chaîne polyorganosiloxane, linéaire ou ramifiée, est en moyenne strictement inférieur à 2.

Par exemple, considérons une chaîne linéaire polyorganosiloxane de formule (V) terminée par des motifs $(R^1)_3SiO$ et comportant 20 motifs siloxyles porteurs de fonctions PD de nature X ; dans la formule (V), on a donc $Y = R^1$ et $m = 20$. Pour satisfaire la condition selon laquelle $m \times G < 2$, il faut que la fraction molaire G des fonctions X de formules (IV-3i) et éventuellement (IV-4i) soit inférieure à 2 : 20 = 0,1 , c'est-à-dire qu'il faut partir, pour réaliser la réaction d'hydrosilylation, d'un mélange de précurseurs dans lequel la fraction molaire G' du précurseur de formule (IX-3i) dans l'ensemble des précurseurs (IX), qui donnera naissances aux fonctions X greffées de formules (IV-3i) et éventuellement (IV-4i), est aussi inférieure à 0,1 (ou 10 % en mole qui représente le seuil). Dans le cadre de cet exemple et dans le cas d'un produit brut de réaction renfermant 10 ou plus de 10 % en mole de précurseur N,N'-dialkénylé de formule (IX-3i), pareil produit brut sera par exemple distillé sous pression réduite en vue d'obtenir une fraction riche (plus de 90 % en mole) en précurseur(s) N-monoalkénylé de formule (IX-i) et éventuellement C-alkénylé de formule (IX-2i) et renfermant la plus faible quantité possible (moins de 10 % en mole) de précurseur N,N'-dialkénylé de formule (IX-3i).

Au cours de cette étape de purification, la totalité ou, à défaut, la majeure partie de la diamine de départ non réagie, s'il en reste dans le milieu réactionnel, sera également éliminée.

En ce qui concerne la manière pratique de mettre en oeuvre la réaction de la phénylènediamine de formule (X) avec le composé halogéné de formule (XI), on trouvera dans l'état antérieur de la technique des documents qui décrivent, au départ d'autres réactifs, des modes opératoires applicables à la conduite du procédé considéré ici.

Comme phénylènediamine de formule (X), on peut citer à titre d'exemple la N,N'-bis(sec-butyl)-p-phénylènediamine. En faisant réagir cette diamine avec par exemple du chlorure d'allyle (dans ce cas, dans la formule (XI), E = Cl, f = 1, $D = -CH_2-$ et $R^{11} = H$), on arrive alors au schéma de synthèse suivant :

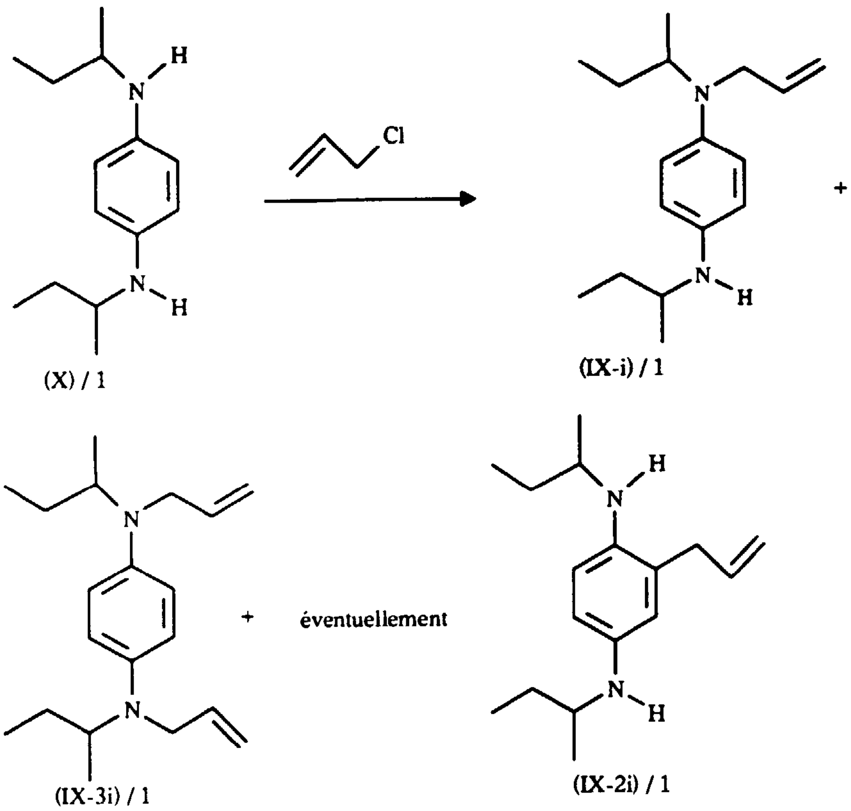

(X) / 1

(IX-i) / 1

+

(IX-3i) / 1

+ éventuellement

(IX-2i) / 1

Dans le cas où l'on souhaite engager dans la réaction d'hydrosilylation des précurseurs (Ψ) qui sont formés en totalité ou en majorité par le composé C-alkénylé de formule (IX-2i), on procède alors à une transposition de aza-Claisen en soumettant le produit brut de la réaction, tel qu'il est obtenu à l'issue de la mise en oeuvre du procédé décrit ci-avant consistant à faire réagir la phénylènediamine de formule (X) et le composé halogéné de formule (XI), à un chauffage à une température comprise entre 150 et 250°C, cette étape de transposition étant suivie, au besoin, d'une purification comme indiqué ci-avant.

Les précurseurs insaturés (Ξ) dont dérivent les fonctions W sont des composés présentant une insaturation éthylénique, située en bout de chaîne, susceptible de réagir en hydrosilylation en présence d'un catalyseur à base d'un métal du groupe du platine. Comme composés (Ξ), on peut citer à titre d'exemples l'octène-1, l'undécène-1, le dodécène-1, le tridécène-1, l'undécènoate de méthyle ou d'éthyle.

Les composés selon l'invention, constitués essentiellement d'un polyorganosiloxane équipé de fonction(s) PPD et éventuellement de fonction(s) compatibilisante(s) peuvent être utilisés, et ceci constitue le troisième objet de l'invention, comme antiozonants pour les caoutchoucs naturels ou synthétiques, et en particulier pour les caoutchoucs pour pneumatiques.

Les composés selon l'invention sont très avantageusement utilisés comme antiozonants pour protéger des caoutchoucs à base d'un ou plusieurs élastomères choisi(s) dans le groupe formé par: le caoutchouc naturel, le polyisoprène, le polybutadiène, le poly(styrène-butadiène), le polychloroprène, le poly(acrylonitrile-butadiène), un terpolymère éthylène-propylène-diène (EPDM), un caoutchouc éthylène-propylène (EPR), le caoutchouc butyle.

Compte-tenu des larges possibilités de variations des nombres relatifs des différents motifs siloxyles présents dans la chaîne siloxanique des polysiloxanes entrant dans le cadre de l'invention, ces dits polysiloxanes peuvent être facilement adaptables aux différents problèmes à résoudre.

Un autre objet encore de la présente invention consiste dans les compositions de caoutchoucs, du type de ceux visés ci-avant, protégées contre les effets de l'ozone, et peu ou pas tâchantes, grâce à l'emploi d'une quantité efficace d'au moins un composé constitué essentiellement d'un polyorganosiloxane équipé de fonction(s) PD et éventuellement de fonction(s) compatibilisante(s).

Plus précisément, ces compositions comprennent pour 100 g de caoutchoucs à protéger, une quantité de composé (s) constitué(s) essentiellement d'un polyorganosiloxane éventuellement mixte qui apporte au moins 3 milliéquivalents (meq) en fonction(s) PD et, de préférence, de 5 à 20 meq en fonction(s) PD. Dans le présent mémoire les équivalents en fonction PD concernent les équivalents en molécules de PD comportant les deux restes azotés

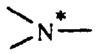 et 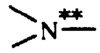 .

Ces compositions peuvent contenir en outre d'autre(s) antiozonant(s). C'est déjà le cas lorsque les polyorganosiloxanes éventuellement mixte(s), entrant dans le cadre de la présente invention, se présentent sous forme d'un mélange avec la para-phénylènediamine de départ à partir de laquelle sont préparés les précurseurs (Ψ) et qui reste présente à côté des précurseur(s) (Ψ) mis en oeuvre dans la réaction d'hydrosilylation. Les autres antiozonants que l'on peut utiliser comprennent notamment : tous ceux de la classe des para-phénylènediamines dont on a rappelé l'existence ci-avant, à la page 1, 3ème paragraphe du présent mémoire, des cires filmogènes comme par exemple celles du type paraffine et/ou du type cire microcristalline ; et des mélanges de pareille(s) paraphénylènediamine(s) et de cire(s).

Ces compositions peuvent encore contenir tous les additifs habituellement utilisés dans le domaine de la protection des caoutchoucs et en particulier des caoutchoucs pour pneumatiques.

Ainsi, on peut mettre en oeuvre tout ou partie des additifs suivants :

. <u>s'agissant du système de vulcanisation</u> :

- des agents de vulcanisation, comme par exemple des péroxydes organiques et/ou des agents de durcissement choisis parmi le soufre ou des composés donneur de soufre, comme par exemple des dérivés de thiurame ;
- des accélérateurs de durcissement au soufre, comme par exemple des dérivés de guanidine, des dérivés de thiazoles et des dérivés de sulfénamides ;

. <u>s'agissant d'autre(s) additif(s)</u> :

- des charges comme par exemple le noir de carbone, la silice, le titane et l'oxyde de zinc ;
- des agents de couplage entre les charges et les élastomères du caoutchouc ;
- des agents antioxydants ;
- des agents ou des huiles de plastification.

Les compositions de caoutchouc ainsi protégées contre l'ozone peuvent être appliquées sous la forme de pneumatiques pour automobiles. Mais d'autres articles peuvent être concernés, comme par exemple : des bandes de convoyeur, des courroies de transmission de puissance, des tuyaux flexibles, des membranes pour toiture, des manchons, des joints de dilatation, des extracteurs à vibrations, des gaines de câbles.

Dans toutes ces applications, la présente invention procure une protection efficace contre l'ozone et ne produit pas une efflorescence marron gênante sur une surface noire ou blanche, et en particulier sur la zone du flanc d'un pneumatique qui est particulièrement sujette à une dégradation par l'ozone.

Les exemples suivants illustrent la présente invention.

## <u>EXEMPLE 1</u>

<u>Exemple de préparation d'un composé essentiellement constitué d'un polyorganosiloxane mixte, selon l'invention</u>

1) Préparation de précurseurs à base de N-(propène-2 yl-1)-N,N'-bis(sec-butyl)-p-phénylènediamine [formule (XI-i)-1]

Dans un réacteur de 2000 $cm^3$ sous atmosphère d'azote, on introduit : 600 g (2,722 moles) de N,N'-bis(sec-butyl)-p-phénylènediamine (mise dans le commerce par la Société Monsanto sous la marque SANTOFLEX 44) ; 357,7 g (2,723 moles) de diisopropyléthylamine ; et 29,1 g (0,287 mole) de triéthylamine. On porte la masse réactionnelle à 46°C. On coule ensuite en 90 minutes 220,9 g (2,887 moles) de chlorure d'allyle. On laisse réagir 7 heures 40 minutes à 55°C ; au bout de ce temps le taux de transformation molaire de la diamine de départ est de 84 %.

On coule ensuite en 35 minutes 503,4 g (3,77 moles) d'une solution aqueuse de NaOH à 30 % en poids (de NaOH), et on laisse sous agitation pendant 30 minutes à température ambiante (23°C). Au bout de ce temps on introduit la masse réactionnelle dans une ampoule à décanter où on procède au lavage de la masse réactionnelle avec 650 $cm^3$ d'eau et où on récupère 1702,4 g de phase organique.

Cette phase organique est dévolatilisée pendant 1 heure à 145°C en opérant sous $9{,}31.10^2$Pa ; on récupère ainsi 704 g d'une huile visqueuse brune. Sur 695,7 g de cette huile, on réalise une rectification à l'aide d'une colonne adiabatique de 1 mètre à garnissage métallique (portant la dénomination commerciale SULTZER). On récupère la fraction ayant un point d'ébullition compris entre 155 - 158°C sous $1{,}06.10^2$ Pa:

- masse : 265 g ;
- composition molaire:

  . diamine de départ de formule (X) / 1 : 3,4 %
  . précurseur N-monoallylé de formule (IX-i) / 1 : 84,6 %
  . précurseur C-monoallylé de formule (IX-2i) / 1 : 10 %
  . précurseur N,N'-di-allylé de formule (IX-3i) / 1 : 1 %.

2) Préparation d'un composé constitué en totalité d'un polyorganosiloxane mixte de formule (V) dans laquelle : m = 19 ; n = 31 ; p = 0 ; q = 0.

Dans un réacteur de 250 $cm^3$, équipé d'un système d'agitation et dont le volume intérieur est maintenu sous une atmosphère d'azote sec, on introduit : 57,9 g de la fraction de rectification obtenue à l'issue de l'étape 1), dont on vient de parler (soit 0,215 mole d'insaturation éthylénique de type allyle) ; 23 mg d'acétate de sodium ; 50 $nm^3$ (50 µl) d'une solution dans le divinyltétraméthyldisiloxane d'un complexe du platine à 12 % en poids de platine ligandé par divinyltétraméthyldisiloxane (catalyseur de KARSTEDT) ; et 95 $cm^3$ de toluène. On agite et porte la température du milieu réactionnel à 90°C.

On coule ensuite, en 105 minutes, 25 g d'une huile polyméthylhydrogénosiloxane (soit 0,395 mole de fonctions Si-H) dont les caractéristiques sont les suivantes :

. Mn = 3160 g ;
. 1580 meq H /100 g ;
. structure moyenne :

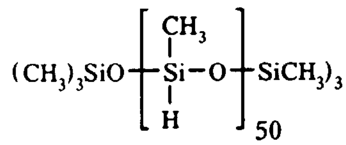

3 heures après la fin de la coulée, le taux de transformation des fonctions SiH est de 38 % molaire. On introduit alors 25 $nm^3$ (25 µl) de la solution de catalyseur de KARSTEDT et on laisse réagir pendant 16 heures supplémentaires à 90°C. Le taux de transformation des fonctions SiH est alors de 43 %.

Au bout de cette durée, on introduit en 90 minutes 39,8 g (0,23 mole ; soit 40 % d'excès par rapport aux fonctions SiH restantes) de dodécène-1 à 97 % en poids, et 25 $nm^3$ (25 µl) de la solution de catalyseur de KARSTEDT, puis on laisse encore 24 heures sous agitation à la même température de 90°C. Au bout de cette durée, le taux de transformation des fonctions SiH est total.

On transvase la masse réactionnelle dans une ampoule à décanter et on effectue quatre lavages avec 4 x 500 $cm^3$ de méthanol pour extraire la diamine de départ de formule (X) résiduelle et les précurseurs allylés non hydrosilylés.

L'huile restante est ensuite dissoute dans l'acétone ; on obtient ainsi une émulsion beige claire de 196,6 g. Cette émulsion est ensuite dévolatilisée à l'aide d'un évaporateur rotatif en opérant un chauffage à 130°C, sous une pression réduite de $6,65.10^2$ Pa, pendant 2 heures. On récupère ainsi 63 g d'une cire dont les caractéristiques sont les suivantes :

. Mn = 13310 g ;
. 143 meq de fonctions para-PD/100 g (soit 286 meq de fonctions amines

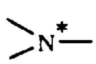 et 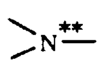 ) ;

. structure moyenne de la cire :

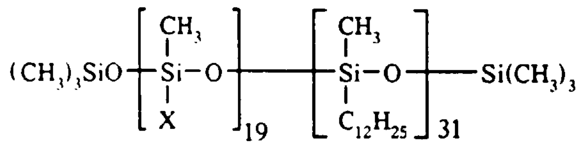

dans laquelle les fonctions para-PD X ont la composition molaire suivante :

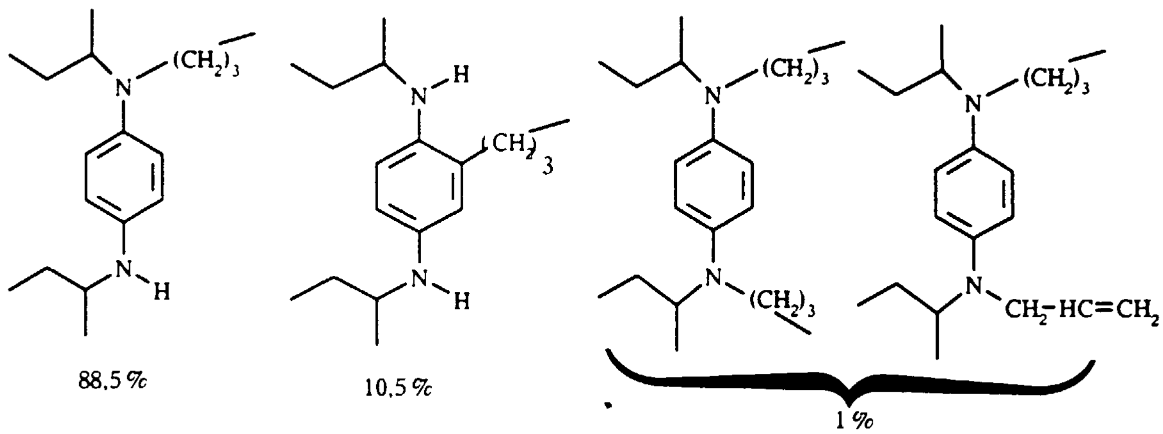

88,5 % 10,5 % 1 %

3) Préparation d'un composé constitué en totalité d'un polyorganosiloxane mixte de formule (V) dans laquelle : m = 38,7 ; n = 11,3 ; p = 0 ; q = 0.

Dans un réacteur de 250 $cm^3$, équipé d'un système d'agitation et dont le volume intérieur est maintenu sous une atmosphère d'azote sec, on introduit: 30,1 mg d'acétate de sodium ; 25 $nm^3$ (25 µl) d'une solution dans le divinyttétraméthyldisiloxane d'un complexe du platine à 12 % en poids de platine ligandé par du divinyltétraméthyldisiloxane (catalyseur de KARSTEDT) ; et 100 $cm^3$ de toluène. On agite et porte la température du milieu réactionnel à 90°C.

On coule ensuite, en 2 heures 45 minutes, simultanément :

- 10,76 g d'une huile polyméthylhydrogénosiloxane (soit 0,170 mole de fonctions Si-H) dont les caractéristiques sont les suivantes :
  - . Mn = 3160 g ;
  - . 1580 meq H/100 g ;
  - . structure moyenne :

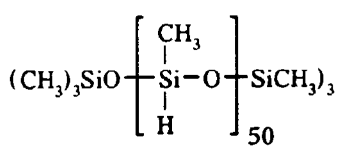

- 43,36 g de la fraction de rectification obtenue à l'issue de l'étape 1), dont on vient de parler (soit 0,161 mole d'insaturation éthylénique de type allyle).

En fin de coulée, le taux de transformation des motifs Si-H est de l'ordre de 44 % molaire, on agite encore pendant 16 heures ; le taux de transformation des motifs Si-H est alors de 83 %.

Au bout de ce temps, on introduit en 5 minutes 17,2 g (0,104 mole) de dodécène-1 à 95 % en poids ; et 25 $mm^3$ (25 µl) de la solution de catalyseur de KARSTEDT. Après avoir coulé le dodécène on laisse réagir le milieu réactionnel à 90°C pendant encore 24 heures. Le taux de transformaiton des fonctions hydrogénosilyles est alors de 100 %.

On transvase la masse réactionnelle dans une ampoule à décanter et on rajoute en plusieurs fractions 1000 $cm^3$ de méthanol, ce qui permet d'extraire la diamine de départ.

L'huile restante est ensuite dissoute dans l'acétone ; on obtient ainsi une émulsion beige claire de 160,3 g. Cette émulsion est ensuite dévolatilisée à l'aide d'un évaporateur rotatif en opérant un chauffage à 130°C, sous une pression réduite de $6{,}65.10^2$ Pa, pendant 2 heures. On récupère ainsi 63 g d'une cire dont les caractéristiques sont les suivantes :

- Mn = 15125 g ;
- 256 meq de fonctions para-PD/100 g (soit 512 meq de fonctions amines) ;
- structure moyenne de la cire :

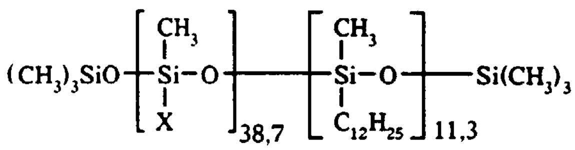

dans laquelle les fonctions para-PD X ont la composition molaire suivante :

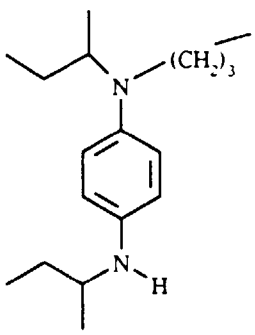

88.5 %

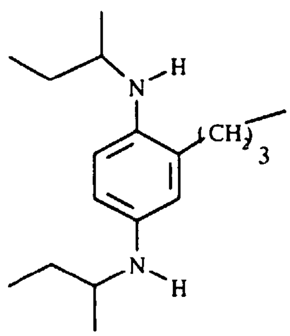

10.5 %

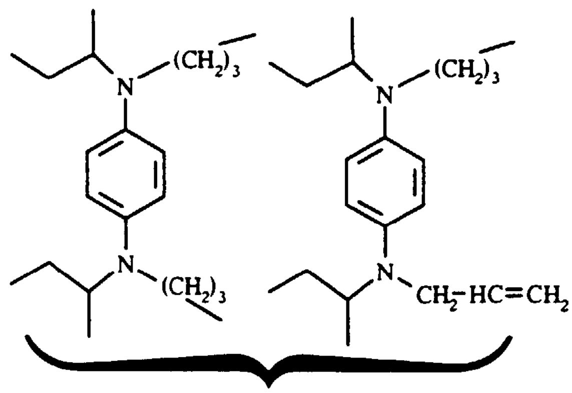

1 %

EXEMPLE 2

Cet exemple illustre l'utilisation et le comportement d'une part des polyorganosiloxanes mixtes selon l'invention préparés dans l'exemple 1, §2 (POS-2) et dans l'exemple 1, §3 (POS-3), et des agents antiozonants de l'art antérieur dans une formulation pour caoutchouc représentative de flanc de pneumatique.

Dans un mélangeur interne (type BANBURY), on prépare environ 1 kg de chacun des quatre mélanges dont la composition, exprimée en parties en poids, est indiquée dans le tableau I suivant :

| Compositions | 1 | 2 | 3 | 4 |
|---|---|---|---|---|
| Caoutchouc NR (SMR 10) (1) | 50 | 50 | 50 | 50 |
| Caoutchouc BR 1220 (2) | 50 | 50 | 50 | 50 |
| Noir de carbone (3) | 50 | 50 | 50 | 50 |
| ZnO actif (4) | 3 | 3 | 3 | 3 |
| Acide stéarique | 1 | 1 | 1 | 1 |

(1) caoutchouc naturel à base de polyisoprène, commercialisé par la Société WURFBAIN (Malaisie) ;
(2) polymère butadiène, commercialisé par la Société SHELL CHIMIE sous la marque BR1220 ;
(3) noir de carbone qualité caoutchouc, commercialisé par la société DEGUSSA sous la marque CORAX N 326 ;
(4) oxyde de zinc qualité caoutchouc, ZnO neige type A, commercialisé par la Société VIEILLE MONTAGNE ;

(suite)

| Compositions | 1 | 2 | 3 | 4 |
|---|---|---|---|---|
| Soufre (5) | 2 | 2 | 2 | 2 |
| TBBS (6) | 1 | 1 | 1 | 1 |
| 6 PPD (7) | 3 (11 meq) | 0 | 0 | 0 |
| Cire Cerelux 120 (8) | 1,5 | 0 | 0 | 0 |
| POS-2 | 0 | 0 | 7,33 (10,4 meq) | 0 |
| POS-3 | 0 | 0 | 0 | 4,08 (10,4 meq) |
| Huile Ferusil (B) (9) | 7 | 7 | 7 | 7 |

(5) agent vulcanisant ;

(6) agent accélérateur à base de N-tertiobutyl-2-benzothiazole-sulfénamide, commercialisé par la Société MONSANTO sous la marque SANTOCURE S ;

(7) antiozonant N-phényl-N'-(diméthyl-1,3 butyl)-p-phénylènediamine, commercialisé par la Société MONSANTO sous la marque SANTOFLEX 13 ;

(8) antiozonant de type cire, sous forme d'un mélange de cire paraffiné et de cire microcristalline, commercialisé par la Société LA CERESINE sous la marque CERELUX 120 ;

(9) agent de mise en oeuvre à base d'un oligomère pétrolier, commercialisé par la Société ENICHEM sous la marque FERUSIL B.

Les compositions sont préparées de la manière suivante.

Dans le mélangeur lent, préchauffé à 70°C, on introduit dans cet ordre et aux temps et températures indiquées entre parenthèses :

- du caoutchouc NR (SMR 10) et du BR 1220 (to) (70°C)
- 50 % de noir de carbone et le (ou les) agent(s) antiozonant(s) (6 PPD + cire ou le POS selon l'invention) (to + 1 min) (80°C)
- 50 % du noir de carbone, l'huile, le ZnO et l'acide stéarique (to + 2 min 30 sec) (105°C).

La décharge du mélangeur (tombée du mélange) se fait quand la température de la chambre atteint 145 - 150°C (c'est-à-dire, à peu près to + 5 min 30 sec).

Le mélange est laissé au repos pendant 12 heures, puis il est introduit dans un mélangeur à cylindres (vitesse avant : 18 t / min ; vitesse arrière : 22 t / min), maintenu à 23°C, pour y être calandré. Dans ce mélangeur on introduit le soufre puis l'accélérateur TBBS en 8 minutes.

Dans la composition n° 4, l'agent antiozonant POS-3 a été introduit dans le mélangeur à cylindres avant le soufre et le TBBS.

Après homogénéisation et quatre passages au fin, le mélange final est calandré sous la forme de feuilles de 2,5 à 3 mm d'épaisseur.

Les mesures des propriétés sont réalisées sur des compositions vulcanisées : la vulcanisation est obtenue en portant les compositions à 145°C pendant : composition 1 : 30 minutes ; composition 2 : 35 minutes ; composition 3 : 15 minutes et composition 4 : 15 minutes.

1) Propriétés de résistance à l'ozone dans des conditions de sollicitations dynamiques :

La concentration en ozone et la température des tests sont respectivement de 50 pphm (parties d'ozone pour 100 millions de parties d'air en volume) et de 40°C.

1.1 L'attaque par l'ozone des échantillons a été évalué visuellement en mettant en oeuvre la méthode décrite ci-après :

- Pour les essais en dynamique 6 éprouvettes par mélange ont été testées.
- Ces éprouvettes ont été découpées dans des plaques de 2 mm d'épaisseur vulcanisées à 2 fois l'optimum de vulcanisation à l'aide de l'emporte pièce NF 46009.
- Elles sont préconditionnées 10 min à 40°C à 20 % de déformation pour les tests en dynamique continu avant introduction dans l'ozoniseur pendant 2 h, 4 h, 8 h, 24 h, 48 h et 72 h.
- Les éprouvettes ne peuvent être contrôlées sans interruption de l'ozoniseur. Les essais en dynamique sont donc stoppés environ 1 heure lors de chaque contrôle.

Critères d'évaluation des craquelures :

| Nombre de craquelures | Taille et profondeur des craquelures |
|---|---|
| A : un petit nombre de craquelures | 1. Qui ne peuvent pas être vues à l'oeil nu mais peuvent être confirmées avec une loupe de grossissement 10. |
| B : un grand nombre de craquelures | 2. Qui peuvent être confirmées à l'oeil nu.<br>3. Dont la largeur et la profondeur sont inférieures à 1 mm. |
| C : des innombrables craquelures | 4. Dont la largeur et la profondeur sont supérieures à 1 mm et inférieures à 3 mm.<br>5. Dont les craquelures sont supérieures à 3 mm ou les éprouvettes prètes à rompre. |

1.2 Résultats :

| Composition | 1 | 2 | 3 | 4 |
|---|---|---|---|---|
| 2 h | RAS | C3 | B2/B4 | B3/C3 |
| 4 h | B1 | C4 | B3/C3 | C4 |
| 8 h | B2 | C5 | C4 | C4/C5 |
| 24 h | C4/C5 | cassé | C5 | C5 |
| 48 h | cassé | cassé | cassé | cassé |
| 72 h | cassé | cassé | cassé | cassé |

La comparaison de l'évolution de la composition 2 (témoin) et des compositions 3 et 4 (selon l'invention) montre l'effet protecteur des composés de l'invention. L'effet protecteur obtenu est très semblable de celui observé avec le meilleur système de l'art antérieur à base de 6 PPD et de cire (composition 1).

2) Propriétés de résistance à la fatigue en flexion :

La fatigue dont il s'agit ici, est la fatigue à la flexion MONSANTO ; elle est mesurée selon les indications de la norme NET 46-021.

Les résultats obtenus sont les suivants :

| composition | 1 | 2 | 3 | 4 |
|---|---|---|---|---|
| mini | 203,7 | 21,9 | 67,7 | 97,9 |
| moyenne | 316 | 32,8 | 277,1 | 404,3 |
| médiane | 288,2 | 31,8 | 294,6 | 430,8 |
| maxi | 480,7 | 53,4 | 452,5 | 667,4 |

La comparaison de l'évolution de la composition 2 (témoin) et des compositions 3 et 4 (selon l'invention) montre que les composés de l'invention protègent bien les caoutchoucs contre la fatigue.

La comparaison de l'évolution de la composition 1 (6 PPD + cire) et des compositions 3 et 4 (selon l'invention) montre que l'effet de protection est supérieur à celui observé avec le meilleur système de l'art antérieur.

3. Propriétés de résistance au tâchage :

3.1 Pour évaluer le tâchage, nous avons mis au point un test basé sur la norme NF T 46-031. On évalue par colorimétrie (paramètre L) la migration des antiozonants en surface d'un caoutchouc blanc covulcanisé sur les mélanges testés. Les échantillons sont d'abord vieillis en étuve à 70°C (1j, 5j et 9j) puis sous UVB (24h).

Préparation du témoin blanc :

Le témoin blanc a la composition suivante (en parties en poids) :

- BX-2 (1) 20
- NR (2) 40
- SBR 1502 (3) 20
- EPDM 3708 (4) 20
- TiO2 15
- Silice Z85 (5) 30
- Acide stéarique 1
- Cire microcristalline (6) 1
- ZnO (type neige) (7) 10
- Soufre (8) 0,5
- DPG (9) 0,6
- DTMT (10) 1

(1) Bromobutyle X2 commercialisé par la Société BAYER-POLYSAR ;
(2) caoutchouc naturel de type SMR 5L, d'origine malaisienne, commercialisé par la Société SAFIC-ALCAN ;
(3) copolymère styrène-butadiène type 1502 commercialisé par la société SHELL-CHIMIE ;
(4) copolymère éthylène-propylène-diène commercialisé par la Société ESSO sous la marque VISTALON 3708 ;
(5) silice qualité caoutchouc commercialisée par la Société RHONE-POULENC ;
(6) cire commercialisée par la Société LA CERESINE sous la marque CERELUX 132 ;
(7) oxyde de zinc qualité caoutchouc, ZnO neige type A, commercialisé par la Société VIEILLE MONTAGNE ;
(8) agent vulcanisant ;
(9) diphényl guanidine ;
(10) disulfure de tétraméthylthiurame, commercialisé par la Société AKZO sous la marque VULCAFOR DTMT.

La formulation est préparée de la manière suivante :

Dans un mélangeur interne type BANBURY tournant à 72 t/min, on introduit dan cet ordre et aux temps et températures indiqués entre parenthèses :

- du BX-2, du NR, du SBR 1505 et de l'EPDM (3708) (to) (60°C) ;
- l'acide stéarique et la cire (to + 1 min 30) .;
- le $TiO_2$ et la silice Z85 (to + 2 min 30) ;
- le ZnO (to + 6 min).

La décharge du mélangeur (tombée du mélange) se fait quand la température de la chambre atteint 118°C (c'est-à-dire, à peu près to + 7 min). Le mélange est introduit dans un mélangeur à cylindres (vitesse avant : 23 t / min ; vitesse arrière : 19 t / min) maintenus à 30°C pour y être calandré. Dans ce mélangeur, on introduit le DTMT, le DPG et le soufre.

On homogénéise et réalise trois passages au fin.

Préparation des échantillons pour le test de tâchage :

Le mélange blanc est calandré sur cylindres, vitesse 18 t / min (avant et arrière). On passe le mélange à l'écartement minimum possible des cylindres soit 0,25 mm. Après retrait au calandrage, le mélange au repos a une épaisseur d'environ 1 mm.

Les mélanges noirs à tester sont calandrés à un écartement de 0,5 mm. Après retrait au calandrage les mélanges ont une épaisseur d'environ 2 mm.

Les mélanges (blanc et noirs) sont découpés aux dimensions exactes du moule (moule plaque optimum soit 125 x 80 mm).

Le mélange blanc est appliqué sur une feuille terphane de 0,07 mm d'épaisseur de la même dimension que le moule. Le mélange noir est posé sur le mélange blanc. A l'aide d'une roulette les deux mélanges sont pressés l'un contre l'autre. Une feuille d'aluminium de 0,1 mm découpée aux dimensions du moule est placé dans le fond de celui-ci. L'ensemble est vulcanisé 20 min à 145°C sous une pression de moulage classique de 15 MPa.

Après vulcanisation il est souvent nécessaire de changer la feuille de terphane, celle-ci pouvant se froisser à l'intérieur du moule. Ce changement se fait aussitôt après le démoulage.

L'ensemble des 2 mélanges avec terphane plus aluminium est maintenu serré à l'aide de trombones tout autour de la plaque afin d'éviter un contact possible de l'air avec le mélange blanc.

Les vulcanisats sont mis au repos à 23°C pendant 24 h puis placés en étuve ventilée 24 heures à 70°C.

Un mélange témoin est constitué en vulcanisant le mélange blanc 20 min à 145°C en y plaçant de chaque côté une feuille de terphane plus une feuille d'aluminium. Ce témoin subit ensuite les mêmes opérations que les mélanges à tester.

3.2- Résultats :

. Paramètre L après 1, 5, 9 jours à 70°C :

| composition / vieillissement | Témoin blanc | 1 | 2 | 3 | 4 |
|---|---|---|---|---|---|
| 1 jour | 93,75 | 91,37 | 93,31 | 92,18 | 92,66 |
| 5 jours | 93,67 | 89,24 | 93,22 | 91,25 | 91,93 |
| 9 Jours | 93,59 | 88,33 | 93,30 | 90,88 | 91,49 |

. Paramètre L après 24 heures d'exposition sous UVB :

| composition / vieillissement | Témoin blanc | 1 | 2 | 3 | 4 |
|---|---|---|---|---|---|
| 24 heures UVB | 91,31 | 49,34 | 93,54 | 82,60 | 84,12 |

La comparaison de l'évolution de la composition 1 (6 PPD + cire) et des compositions 3 et 4 (selon l'invention) montre que les composés de l'invention tâchent moins que les antiozonants de l'art antérieur à base de 6 PPD.

**Revendications**

**1.** Composés constitués essentiellement d'un polyorganosiloxane, caractérisé en ce qu'il comprend par molécule au moins 3 motifs siloxyles dont au moins un motif siloxyle fonctionnel de formule :

$$(R^1)_aXSi(O)_{\frac{3-a}{2}} \quad (I)$$

dans laquelle :

- les symboles $R^1$ sont identiques ou différents et représentent chacun un radical hydrocarboné monovalent choisi parmi les radicaux alkyles, linéaires ou ramifiés, ayant de 1 à 4 atomes de carbone et phényle ;
- les symboles X sont identiques ou différents et représentent chacun un groupe comprenant une fonction phénylènediamine N,N' di- et/ou trisubstituée, liée à un atome de silicium par une liaison Si-(rotule hydrocarbonée)-N et/ou Si-(rotule hydrocarbonée)-C ;
- a est un nombre choisi parmi 0, 1 et 2.

**2.** Composés constitués essentiellement d'un polyorganosiloxane selon la revendication 1, caractérisé en ce que les radicaux $R^1$ sont : méthyle, éthyle, n-propyle, isopropyle, n-butyle.

**3.** Composés constitués essentiellement d'un polyorganosiloxane selon la revendication 1 ou 2, caractérisé en ce que les fonctions PD représentées par les symboles X sont choisies parmi les radicaux de formules :

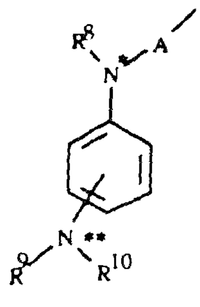
(IV-i)

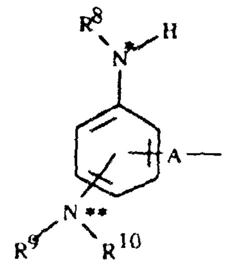
(IV-2i)

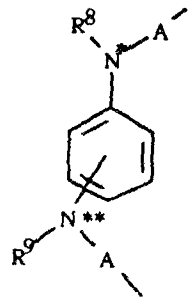
(IV-3i)

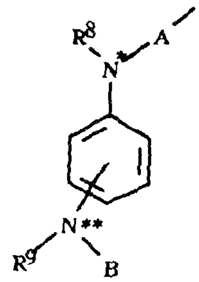
(IV-4i)

et leur mélange, formules dans lesquelles :

. A est un radical organique divalent de formule :

$$-(D)_f-CHR^{11}-CH_2-$$

où : D est un reste alkylène, linéaire ou ramifié, ayant de 1 à 10 atomes de carbone, avec f étant un nombre égal à 0 ou 1 ; $R^{11}$ est un atome d'hydrogène ou un radical alkyle, linéaire ou ramifié, ayant de 1 à 3 atomes de carbone ; la valence libre de droite en caractère gras est celle qui est reliée à un atome de silicium, tandis que l'autre valence libre à gauche est reliée à un atome d'azote ;

. B est un radical organique monovalent de formule :

$$-(D)_f-CR^{11}=CH_2$$

où les symboles D, f et $R^{11}$ ont les significations données ci-avant à propos du radical A ;

. les radicaux $R^8$ et $R^9$, identiques ou différents, sont choisis parmi les radicaux alkyles, linéaires ou ramifiés, ayant de 3 à 18 atomes de carbone, les radicaux cycloalkyles ayant de 4 à 12 atomes de carbone, phényle, benzyle et naphtyle ;

. $R^{10}$, qui peut être identique à $R^8$ et/ou $R^9$, est choisi parmi un atome d'hydrogène et l'un des radicaux représentés par $R^8$ et $R^9$ ;

. chaque reste amino

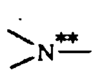 ,

d'un cycle benzénique est en position ortho, méta ou para par rapport à l'autre reste amino

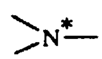 ;

. le radical A de la formule (I-2i) est en position ortho ou para par rapport au reste amino

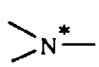 ;

⇒ au moins une des fonctions X répond à la formule (IV-i) ou (IV-2i), et
⇒ quand, le cas échéant, on a un mélange de fonctions X de formules (IV-i) et/ou (IV-2i) avec des fonctions X de formules (IV-3i) et éventuellement (IV-4i), le nombre de fonctions X de formules (IV-3i) et éventuellement (IV-4i) greffées sur une chaîne polyorganosiloxane, linéaire ou ramifiée, est en moyenne strictement inférieur à 2.

**4.** Composés constitués essentiellement d'un polyorganosiloxane selon l'une quelconque des revendications 1 à 3, caractérisé en ce qu'il comprend en outre au moins un autre motif fonctionnel de formule :

$$(R^1)_b WSi(O)_{\frac{3-b}{2}} \qquad (II)$$

dans laquelle :

. les symboles $R^1$ ont les mêmes significations que celles données ci-avant à propos de la formule (I) ;
. le symbole W représente un groupe monovalent à fonction compatibilisante choisi parmi : un radical alkyle, linéaire ou ramifié, ayant plus de 4 atomes de carbone ; un radical de formule $-R^2-COO-R^3$ dans laquelle $R^2$ représente un radical alkylène, linéaire ou ramifié, ayant de 5 à 20 atomes de carbone et $R^3$ représente un radical alkyle, linéaire ou ramifié, ayant de 1 à 12 atomes de carbone ; un radical de formule $-R^4-O-(R^5-O)_c-R^6$ dans laquelle $R^4$ représente un radical alkylène, linéaire ou ramifié, ayant de 3 à 15 atomes de carbone, $R^5$ représente un radical alkylène, linéaire ou ramifié, ayant de 1 à 3 atomes de carbone, c est un nombre de 0 à 10 et $R^6$ représente un atome d'hydrogène, un radical alkyle, linéaire ou ramifié ayant de 1 à 12 atomes de carbone ou un radical acyle $-CO-R^7$ où $R^7$ représente un radical alkyle linéaire ou ramifié ayant de 1 à 11 atomes de carbone ;
. b est un nombre choisi parmi 0, 1 et 2.

**5.** Composés constitués essentiellement d'un polyorganosiloxane selon la revendication 4, caractérisé en ce que les fonctions W sont choisies : parmi un radical alkyle, linéaire ou ramifié, ayant de 5 à 18 atomes de carbone ; un radical de formule$-R^2-COO-R^3$ dans laquelle $R^2$ représente un radical alkylène, linéaire ou ramifié, ayant de 8 à 12 atomes de carbone et $R^3$ représente un radical alkyle, linéaire ou ramifié, ayant de 1 à 6 atomes de carbone ; un radical de formule $-R^4-O-(R^5-O)_c-R^6$ dans laquelle $R^4$ représente un radical alkylène, linéaire ou ramifié, ayant de 3 à 6 atomes de carbone, $R^5$ représente un radical alkylène linéaire ou ramifié ayant de 2 à 3 atomes de carbone, c est un nombre de 0 à 6 et $R^6$représente un atome d'hydrogène, un radical alkyle, linéaire ou ramifié, ayant de 1 à 6 atomes de carbone ou un radical acyle $-CO-R^7$ où $R^7$ représente un radical alkyle, linéaire ou ramifié, ayant de 1 à 5 atomes de carbone.

**6.** Composés constitués essentiellement d'un polyorganosiloxane selon l'une quelconque des revendications 1 à 5, caractérisé en ce qu'il comprend en outre d'autre(s) motif(s) siloxyle(s) de formule :

$$(R^1)_d(H)_e Si(O)_{\frac{4-(d+e)}{2}} \qquad (III)$$

dans laquelle :

. les symboles $R^1$ ont les mêmes significations que celles données ci-avant à propos de la formule (I) ;
. d est un nombre choisi parmi 0, 1, 2 et 3 ;
. e est un nombre choisi parmi 0 et 1 ;
. la somme d + e est au plus égale à 3.

**7.** Composés constitués essentiellement d'un polyorganosiloxane selon l'une quelconque des revendications 1 à 6, caractérisé en ce qu'il est choisi parmi :

- des composés constitués essentiellement de polymères polyorganosiloxanes éventuellement mixtes, linéaires, statistiques, séquencés ou à blocs, de formule moyenne:

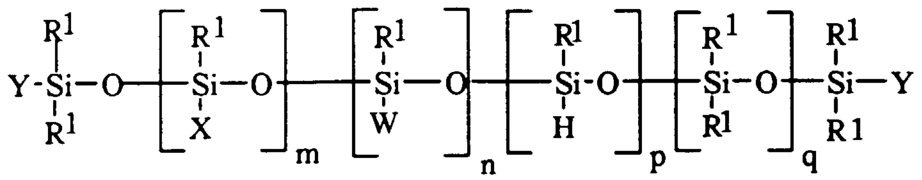

dans laquelle :

- les symboles $R^1$, X et W ont les significations générales données ci-avant à propos des formules (I) et (II) ;
- les symboles Y représente un radical monovalent choisi parmi $R^1$, X, W et un atome d'hydrogène ;
- m est un nombre entier ou fractionnaire allant de 0 à 180 ;
- n est un nombre entier ou fractionnaire allant de 0 à 180 ;
- p est un nombre entier ou fractionnaire allant de 0 à 10 ;
- q est un nombre entier ou fractionnaire allant de 0 à 100 ;
- avec les conditions selon lesquelles :
  - si m est différent de 0 et dans le cas éventuel des polymères mixtes si n est différent de 0 : la somme m + n + p + q se situe dans l'intervalle allant de 5 à 200 ; le rapport 100 m / (m + n + p + q + 2) ≥ 0,5 ; et le rapport 100 n / (m + n + p + q + 2) ≥ 0,5, ce rapport étant identique ou différent du précédent rapport ;
  - si m = 0 et dans le cas éventuel des polymères mixtes si n est différent de 0 : au moins un des substituants Y représente le radical X ; la somme n + p + q se situe dans l'intervalle allant de 5 à 100 ; et le rapport 100 n / (n + p + q + 2) ≥ 0,5,
  - si m est différent de 0 et n = 0 : la somme m + p + q se situe dans l'intervalle allant de 5 à 100 ; le rapport 100 m / (m + p + q + 2) ≥ 0,5 ; et dans le cas éventuel des polymères mixtes au moins un des substituants Y représente le radical W ;
  - si m = 0 et n = 0 : la somme p + q se situe dans l'intervalle allant de 5 à 100 ; l'un des substituants Y étant le radical X ; et dans le cas éventuel des polymères mixtes l'autre substituant Y étant le radical W ; et,
- avec la condition supplémentaire selon laquelle, si m est différent de 0 et si X comprend des fonctions de formules (IV-3i) et éventuellement (IV-4i), chacun des trois produits suivants :
  - le produit (m + 1) x G, quand un seul des substituants Y représente le radical X, ou
  - le produit (m + 2) x G, quand les deux substituants Y représentent le radical X, ou
  - le produit m x G, quand les deux substituants Y représentent les radicaux $R^1$ et/ou W,

est strictement inférieur à 2, où G est la fraction molaire des fonctions X de formule (IV-3i) et éventuellement (IV-4i) dans l'ensemble des fonctions X de structure (IV) ;

et ceux de formule moyenne :

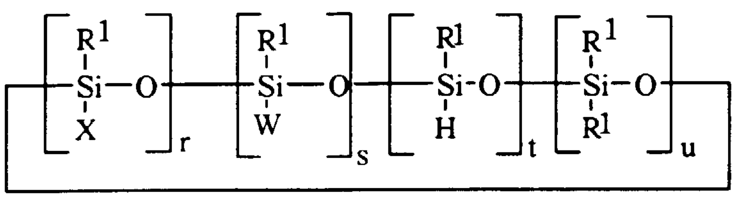

(VI)

dans laquelle :

- les symboles $R^1$, X et W ont les significations générales données ci-avant à propos des formules (I) et (II) ;
- r est un nombre entier ou fractionnaire allant de 1 à 9 ;
- s est un nombre entier ou fractionnaire allant de 0 à 9 ;
- t est un nombre entier ou fractionnaire allant de 0 à 0,5 ;
- u est un nombre entier ou fractionnaire allant de 0 à 5 ;

. la somme r + s + t + u se situe dans l'intervalle allant de 3 à 10 ;
. avec la condition selon laquelle, si X comprend des fonctions de formules (IV-3i) et éventuellement (IV-4i), le produit r x G est strictement inférieur à 2, G étant la fraction molaire définie ci-avant à propos de la formule (V).

**8.** Composés constitués essentiellement d'un polyorganosiloxane linéaire mixte PLS1 selon la revendication 7, caractérisé en ce que . les symboles Y représentent $R^1$ ;

. m est un nombre entier ou fractionnaire allant de 1 à 90 ;
. n est un nombre entier ou fractionnaire allant de 1 à 90 ;
. p est un nombre entier ou fractionnaire allant de 0 à 5 ;
. q est un nombre entier ou fractionnaire allant de 0 à 50 ;
. la somme m + n + p + q est un nombre entier ou fractionnaire allant de 10 à 100;
. le rapport 100 m / (m + n + p + q + 2) se situe dans l'intervalle allant de 10 à 90 ;
. le rapport 100 n / (m + n + p + q + 2) se situe dans l'intervalle allant de 10 à 90, ce rapport pouvant être identique ou différent du rapport précédent ; et
. avec la condition selon laquelle, si X comprend des fonctions de formules (IV-3i) et éventuellement (IV-4i), le produit m x G est strictement inférieur à 2, G étant la fraction molaire définie ci-avant à propos de la formule (V) ;
. les radicaux $R^1$, X et W possèdent simultanément les définitions données ci-avant à propos de chacun d'eux dans les revendications 2, 3 et 5 précitées.

**9.** Composés constitués essentiellement d'un polyorganosiloxane cyclique mixte PCS1 selon la revendication 7, caractérisé en ce que . r est un nombre entier ou fractionnaire allant de 1 à 4,5 ;

. s est un nombre entier ou fractionnaire allant de 1 à 4,5 ;
. t est un nombre entier ou fractionnaire allant de 0 à 0,25 ;
. u est un nombre entier ou fractionnaire allant de 0 à 2,5 ;
. la somme r + s + t + u est un nombre entier ou fractionnaire allant de 3 à 5 ; . avec la condition selon laquelle, si X comprend des fonctions de formules (IV-3i) et éventuellement (IV-4i), le produit r x G est strictement inférieur à 2, G étant la fraction molaire définie ci-avant à propos de la formule (V) ;
. les radicaux $R^1$, X et W possèdent simultanément les définitions données ci-avant à propos de chacun d'eux dans les revendications 2, 3 et 5 précitées.

**10.** Procédé de préparation d'un composé constitué essentiellement d'un polyorganosiloxane, éventuellement mixte, selon l'une quelconque des revendications 1 à 9, caractérisé en ce qu'il consiste à mettre en oeuvre :

- dans le cas de polymères à fonction(s) PD uniquement : une réaction d'addition (hydrosilylation), ou
- dans le cas de polymères mixtes à fonction(s) PD et à fonction(s) compatibilisante(s) : deux réactions d'additions (hydrosilylations) simultanées ou successives,

ce à partir : des organohydrogénopolysiloxanes (H) correspondants exempts des fonctions X et W, du (ou des) précurseur(s) (Ψ) dont dérive(nt) la (ou les) fonction(s) X et éventuellement du (ou des) précurseur(s) (Ξ) dont dérive(nt) le (ou les) fonction(s) W, et que les quantités des réactifs engagés correspondent à un rapport molaire [(Ψ) + éventuellement (Ξ)] / SiH [de (H)] qui est de l'ordre de 1 à 5.

**11.** Procédé selon la revendication 10, caractérisé en ce que les précurseurs (Ψ), dont dérivent les fonctions X, sont les composés insaturés éthyléniquement formé par les phénylènediamines de formules :

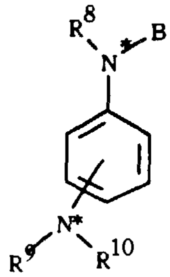,
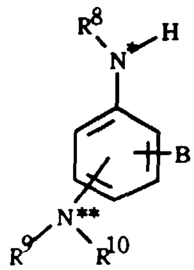,
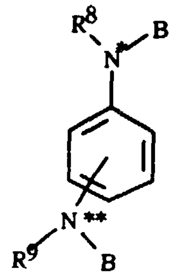

(IX-i) (IX-2i) (IX-3i)

et leurs mélanges,

. les significations des symboles $R^8$, $R^9$, $R^{10}$, B et les diverses positions possibles des groupes

; 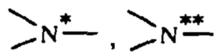

et B sur les cycles benzéniques étant celles indiquées ci-avant à propos des formules (IV-i) à (IV-4i) ;

⇒ au moins un des précurseurs (Ψ) répond à la formule (IX-i) ou (IX-2i), et

⇒ quand, le cas échéant, on engage un mélange de précurseurs de formules (IX-i) et/ou (IX-2i) avec un précurseur de formule (IX-3i), la fraction molaire G' de précurseur de formule (IX-3i) dans l'ensemble des précurseurs de structure (IX) est déterminée de manière à ce que, après réalisation de la réaction d'hydrosilylation, le nombre de fonctions X de formules (IV-3i) et éventuellement (IV-4i) qui en dérivent, greffées sur une chaîne polyorganosiloxane, linéaire ou ramifiée, est en moyenne strictement inférieur à 2.

**12.** Procédé selon la revendication 11, caractérisé en ce que les précurseurs (Ψ) qui sont engagés dans la réaction d'hydrosilylation se trouvent sous la forme du le produit de réaction à l'état brut tel qu'il est obtenu à l'issue de la mise en oeuvre du procédé consistant à faire réagir la phénylènediamine de formule :

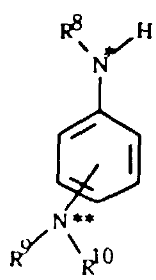

(X)

avec un composé halogéné de formule :

$$E-(D)_f-CR^{11}=CH_2 \qquad (XI)$$

où E représente un atome d'halogène tandis que les symboles D, f et $R^{11}$ ont les significations données ci-avant à propos des formules (IV-i) à (IV-4i), en opérant en présence d'une quantité appropriée d'au moins une amine tertiaire, ledit produit de réaction à l'état brut devant subir au préalable, avant d'être engagé dans la réaction d'hydrosilylation, une étape de purification dans les cas suivants :

. lorsque le taux de transformation de la diamine de départ de formule (X) est incomplet, la purification ayant alors pour but d'éliminer toute ou partie de la diamine de départ non réagie, et/ou

. lorsque le substituant $R^{10}$ de la diamine de départ de formule (X) est H et il se forme le précurseur N,N'-dialkénylé de formule (IX-3i) avec une fraction molaire égale ou supérieure au seuil à partir duquel, après la réalisation de la réaction d'hydrosilylation, on va être conduit à des fonctions X greffées de formules (IV-3i) et éventuellement (IV-4i) dont le nombre par chaîne polyorganosiloxane, linéaire ou ramifiée, sera en moyenne égal ou supérieur à 2, la purification ayant alors pour but d'abaisser la fraction molaire du précurseur de formule (IX-3i) de manière à ce que le nombre de fonctions X précitées par chaîne polyorganosiloxane, linéaire ou ramifiée, soit en moyenne strictement inférieur à 2.

**13.** Procédé selon la revendication 12, caractérisé en ce que dans le cas où l'on souhaite engager dans la réaction d'hydrosilylation des précurseurs (Ψ) qui sont formés en totalité ou en majorité par le composé C-alkénylé de formule (IX-2i), on procède alors à une transposition de aza-Claisen en soumettant le produit brut de la réaction, tel qu'il est obtenu à l'issue de la mise en oeuvre du procédé consistant à faire réagir la phénylènediamine de formule (X) et le composé halogéné de formule (XI), à un chauffage à une température comprise entre 150 et 250°C, cette étape de transposition étant suivie, au besoin, d'une purification comme indiqué ci-avant.

**14.** A titre de moyens pour la mise en oeuvre du procédé selon la revendication 10, les nouvelles phénylènediamines à groupements insaturés de formules :

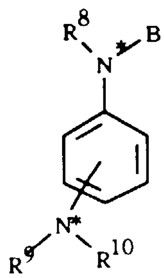

(IX-i)

,

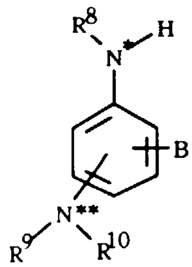

(IX-2i)

,

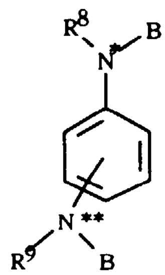

(IX-3i)

et leurs mélanges, les significations générales ou particulières des symboles $R^8$, $R^9$, $R^{10}$, B et les diverses positions possibles des groupes

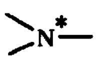 , 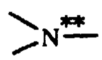

et B sur les cycles benzéniques étant celles indiquées ci-avant à propos des formules (IV-i) à (IV-4i).

**15.** Utilisation d'une quantité efficace d'un composé constitué essentiellement d'un polyorganosiloxane éventuellement mixte selon l'une quelconque des revendications 1 à 9, comme antiozonant pour les caoutchoucs naturels et/ou synthétiques, et en particulier pour les caoutchoucs pour pneumatiques.

**16.** Utilisation selon la revendication 15, caractérisée en ce que les caoutchoucs à protéger sont à base d'un ou plusieurs élastomères choisi(s) dans le groupe formé par : le caoutchouc naturel, le polyisoprène, le polybutadiène, le poly(styrène-butadiène), le polychloroprène, le poly(acrylonitrile-butadiène), un terpolymère éthylène-propylène-diène (EPDM), un caoutchouc éthylène-propylène (EPR), le caoutchouc butyle.

**17.** Composition de caoutchouc(s) protégée contre les effets de l'ozone, et peu ou pas tâchante, caractérisée en ce qu'elle comprend : pour 100 g de caoutchouc(s) à protéger, une quantité de composé(s) constitué(s) essentiellement d'un polyorganosiloxane éventuellement mixte qui apporte au moins 3 milliéquivalents (meq) en fonction(s) PD.

**18.** Compositions selon la revendication 17, caractérisée en ce que les caoutchoucs à protéger sont à base d'un ou plusieurs élastomères choisi(s) dans le groupe formé par : le caoutchouc naturel, le polyisoprène, le polybutadiène, le poly(styrène-butadiène), le polychloroprène, le poly(acrylonitrile-butadiène), un terpolymère éthylène-propylène-diène (EPDM), un caoutchouc éthylène-propylène (EPR), le caoutchouc butyle.

**19.** Composition de caoutchouc(s) selon la revendication 17 ou 18, destiné à des applications pneumatiques, caractérisée en ce qu'elle renferme en outre les additifs habituels mis en oeuvre dans les compositions de caoutchouc (s) pour pneumatiques.

**20.** Article en caoutchouc(s) protégé contre les effets de l'ozone, caractérisé en ce qu'il possède un corps comprenant la composition de la revendication 17 ou 18.

**21.** Article en caoutchouc(s) selon la revendication 20, caractérisé en ce que ledit article est un pneumatique ou une partie d'un pneumatique comme un flanc.

Office européen des brevets

# RAPPORT DE RECHERCHE EUROPEENNE

Numero de la demande
EP 96 42 0156

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 157 499 (TAKEMOTO YUSHI)<br>* revendication 1 *<br>--- | 1-7 | C08L83/08<br>C08G77/388 |
| X | WO-A-92 00303 (MCCARTHY ET AL)<br>* page 8, ligne 27 - ligne 37 *<br>* page 9, ligne 2; revendication 1 *<br>--- | 1-8 | |
| X | US-A-4 483 972 (MITCHELL)<br>* colonne 6, ligne 33 - ligne 40; revendication 1 *<br>----- | 1-7 | |
| | | | **DOMAINES TECHNIQUES RECHERCHES (Int.Cl.6)** |
| | | | C08L<br>C08G |

Le présent rapport a été établi pour toutes les revendications

| Lieu de la recherche | Date d'achèvement de la recherche | Examinateur |
|---|---|---|
| LA HAYE | 19 Septembre 1996 | Lentz, J |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)